# EUROPEAN PATENT APPLICATION

(11) **EP 4 797 476 A1**
(43) Date of publication of application: **26.08.2026**
(21) Application number: 26158540.0
(22) Date of filing: 13.02.2026
(51) Int. Cl.: H02J 1/10, B64D 27/34, B64D 27/35

(54) **ELECTRIC POWER SYSTEM ARCHITECTURE**

(30) Priority: 25.02.2025 US 202519062823
(71) Applicant: GE Aviation Systems Limited, Bishops Cleeve Cheltenham Gloucestershire GL52 8SF (GB)
(72) Inventor: ELDER, James Angelo, Cheltenham, GL52 8SF (GB)
(74) Representative: Openshaw & Co.

(57) **Abstract**

An electrical power system architecture (200) is described herein. In some approaches, an electrical system for an aircraft (100) includes an electrical source (202), an electrical load (204), and a power distribution system (206). The power distribution system (206) includes a plurality of power channels (208) connecting the electrical source (202) to the electrical load (204). The electrical power is distributed in each power channel (208) under normal operating conditions and, in the event of a power channel failure, the electrical power is distributed by a subset of the plurality of power channels (208) such that the aircraft (100) can maintain aircraft flight conditions during the power channel failure.

## Description

### TECHNICAL FIELD

These teachings relate generally to an aircraft and more particularly to a fault tolerant electric power system architecture.

### BACKGROUND

Aircraft electrical power systems are used to support various onboard functions and operations of the aircraft. These aircraft electrical power systems often include a distribution system to distribute electrical power from an electrical source to an electrical load. Modern electrical systems may operate at higher voltages and currents, which can elevate the risk of a fault and amplify the impact of such faults. In turn, these faults may affect the operation and dispatch reliability of the aircraft. Thus, a multi-redundant architecture for various power sources may be desirable.

### BRIEF DESCRIPTION OF DRAWINGS

Various needs are at least partially met through provision of the electric power system architecture described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:
FIG. 1 is a schematic view of an aircraft in accordance with various embodiments of these teachings;
FIG. 2 is a schematic view of a propulsion system in accordance with various embodiments of these teachings;
FIG. 3 is a schematic diagram of an electrical system for an aircraft in accordance with various aspects of these teachings;
FIG. 4 is a schematic diagram of an electrical system for an aircraft in accordance with various aspects of these teachings;
FIG. 5 is a schematic diagram of an electrical system for an aircraft in accordance with various aspects of these teachings;
FIG. 6 is a schematic diagram of an electrical system for an aircraft in accordance with various aspects of these teachings;
FIG. 7 is a schematic diagram of an electrical system for an aircraft in accordance with various aspects of these teachings; and
FIG. 8 is a schematic diagram of an electric propulsion system architecture for an aircraft in accordance with various aspects of these teachings.

Elements in the figures are illustrated for simplicity and clarity and have not necessarily been drawn to scale. For example, the dimensions and/or relative positioning of some of the elements in the figures may be exaggerated relative to other elements to help improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required.

### DETAILED DESCRIPTION

The approaches provided herein provide a multi-redundant architecture to provide increased fault tolerance whilst improving the asymmetric thrust and dispatch performance of an aircraft. In these regards and as will be described herein, multiple levels of redundancy are incorporated throughout the electric power system architecture designed for a range of power ratings and varying power sources.

Aircraft typically use a single channel electrical system to manage the distribution of power. Generally, in the single channel electrical system, any component or wiring failure within the electrical system could cause loss of one or more portions of and/or the entire electrical system, which is highly undesirable for hybrid electric aircraft. The lack of redundancy means that a single point of failure may significantly impact the aircraft's ability to maintain flight conditions due to a loss of power, whereby one or more engines may be operated in conditions below a takeoff operating condition, a cruise operating condition, or other high power operating conditions. To that effect, the uneven distribution of power, e.g., as a result of the single channel electrical failure on one side of the aircraft, may result in asymmetric thrust production causing an aircraft to yaw towards the side with less or no thrust production. In addition, the aircraft's dispatchability, which refers to the aircraft's readiness and reliability to be dispatched for flight operations, may be impacted due to the power available after the single channel electrical failure.

Advantageously, the approaches described herein provide a multi-redundant architecture to provide continued flight operations whilst improving the asymmetric thrust and dispatch performance for hybrid electric aircraft. As compared to traditional approaches, the architecture described herein extends the redundancy throughout electrical system including the electrical source, the conversion unit, the power distribution system, the inversion unit and the electrical load. Thus, each component is designed to a level of redundancy, significantly reducing the likelihood of a complete system failure. Additionally, redundancy is achieved by distributing the electrical power load across multiple redundant power channels, ensuring that the loss of one channel does not significantly impact the overall system performance. Further, the asymmetric thrust is improved as the aircraft may lose a small amount (such as, for example, less than 25%) of thrust in the event of a power channel failure, such that the aircraft remains balanced without requiring significant adjustment or reconfiguration to the flight mechanics.

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The terms "upstream" and "downstream" refer to the relative direction with respect to the flow of electrical current. For example, "upstream" refers to the direction from which the electrical current originates, and "downstream" refers to the direction to which the electrical current is received.

The term "dispatch capability" refers to an aircraft's ability to be released for flight operations under specific conditions and requirements, generally including an aircrafts readiness and suitability for flight.

The term "aircraft flight condition rating" refers to an engine rating which defines operational thresholds of an aircraft engine. Generally, these may include, but not limited to, maximum takeoff power (e.g., the power or thrust during takeoff), maximum continuous power (e.g., the power or thrust to sustain flight), one engine inoperative rating (e.g., the power or thrust setting when one engine fails), maximum climb power (e.g., the power or thrust during the climb phase of flight), and cruise power (e.g., the power or thrust during the cruise phase of flight).

The term "mission critical parameter" refers to an operational or performance characteristic the aircraft engine whereby the engine is operating in the minimum condition that is rated for completion of a designated mission. Generally, these parameters may include flight altitude, airspeed, engine performance, or the like. The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

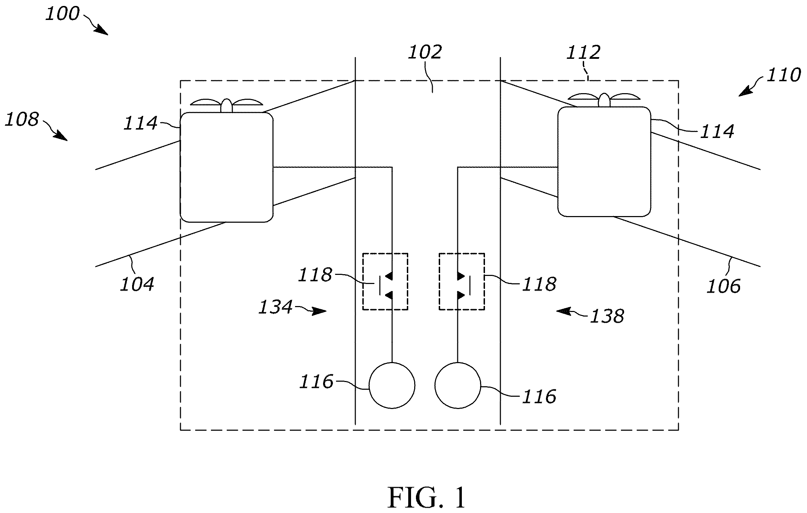

Referring now to the drawings, wherein identical numerals indicate the same elements throughout the figures, FIG. 1 is a schematic view of an aircraft 100 in accordance with an exemplary embodiment of the present disclosure. The aircraft 100 includes a fuselage 102 with a first wing 104 extending from a port side of the aircraft 100 and a second wing 106 extending from the starboard side of the aircraft 100. The first wing 104 and a portion of the fuselage 102 define a first side 108, and the second wing 106 and a portion of the fuselage 102 define a second side 110.

The aircraft 100 further includes a propulsion system 112. In examples, the propulsion system 112 includes a first electrical system 134 and a second electrical system 136. Both electrical systems 134, 136 include one or more propulsion units 114 and one or more electrical energy sources 116. A power distribution system 118 electrically connects the one or more propulsion units 114 to the one or more electrical energy sources 116. For the embodiment depicted, the first electrical system 134 includes a prolusion unit 114 located and mounted to the first side 108 of the aircraft 100, or more particularly, to the first wing 104 and the second electrical system 136 includes a propulsion unit 114 located and mounted to the second side 110 of the aircraft 100, or more particularly, to the second wing 106.

It will be appreciated that the exemplary propulsion system 112 depicted in FIG. 1 is by way of example only. In other exemplary embodiments, it may have other suitable configurations. For example, the propulsion system 112 may additionally include one or more propulsion unit 114 located and mounted to the first side 108 and one or more propulsion unit 114 located and mounted to the second side 110. Additionally, the propulsion system 112 may include one or more power distribution system 118.

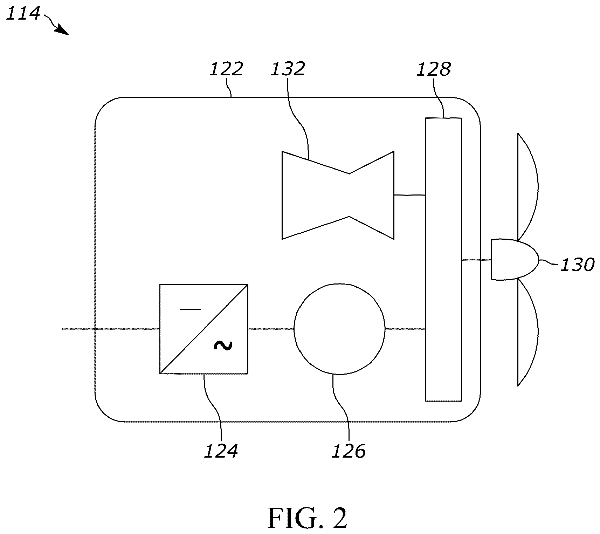

Referring now to FIG. 2, a schematic view of an exemplary propulsion unit 114 that may be incorporated into the exemplary propulsion system 112 as depicted in FIG. 1. For example, the propulsion unit 114 is configured as an electric propulsion unit. The propulsion unit 114 includes an inverter 124, an engine 126, a rotating element 128, and a fan 130. The rotating element 128 may include one or more shafts, gearboxes, or other mechanical systems. The engine 126 may include one or more of an electric motor, a multiphase motor or any other suitable source of torque and power. The propulsion unit 114 further includes an annular casing or outer nacelle 122 that circumferentially surrounds at least part of the engine 126, the rotating element 128 and the fan 130. In some embodiments, the propulsion unit 114 may be configured as a hybrid-electrical propulsion unit and may additionally include a combustor 132 to supply mechanical power to the rotating element 128.

The inverter 124 is configured to receive electrical power from the power distribution system 118 (as shown in FIG. 1) and convert the electrical power from a direct current (DC) electrical power to an alternating current (AC) electrical power. The inverter 124 transfers the electrical power to the engine 126. The engine 126 provides torque and electrical power to the rotating element 128 to drive the fan 130 and produce thrust.

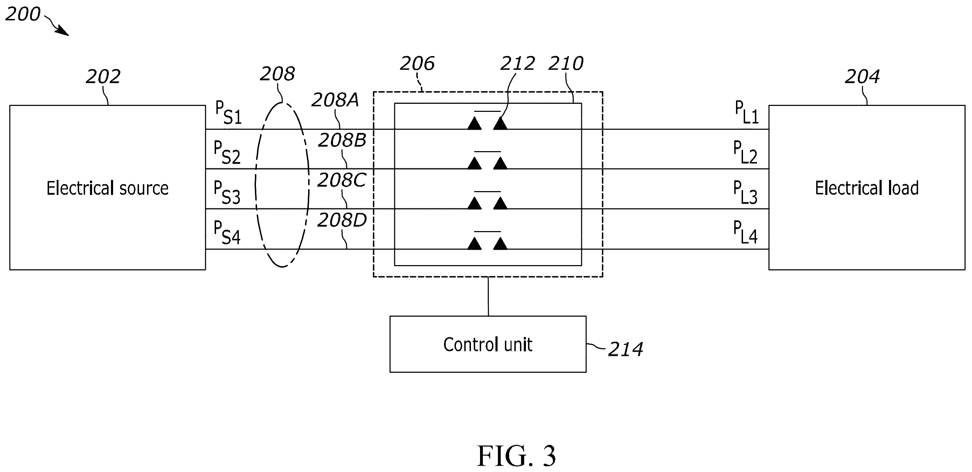

Referring to FIG. 3, a schematic diagram for an electrical system 200 for an aircraft in accordance with aspects of the present disclosure is provided. The exemplary electrical system 200 may be incorporated into the propulsion system 112 of the aircraft 100 of FIG. 1. In particular, the electrical system 200 may be incorporated into the first electrical system 134 and the second electrical system 136 as shown in FIG. 1. As will be appreciated, the electrical system 200 includes an electrical source 202, an electrical load 204, and a power distribution system 206.

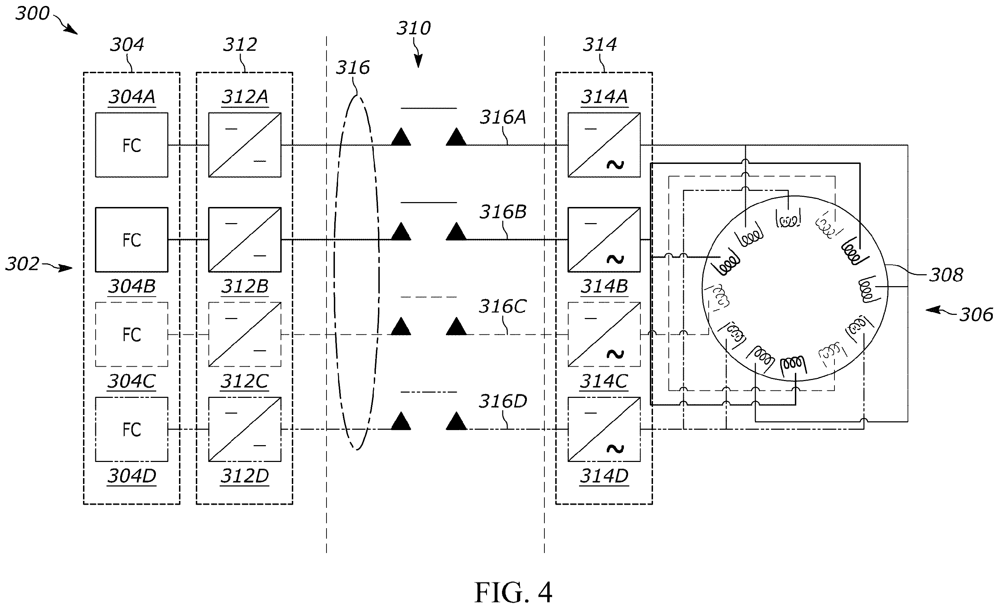

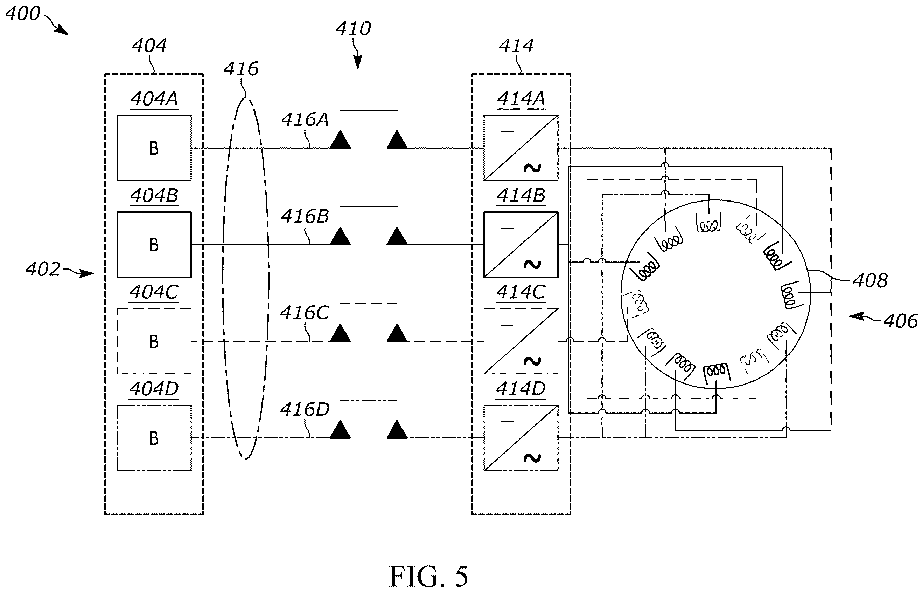

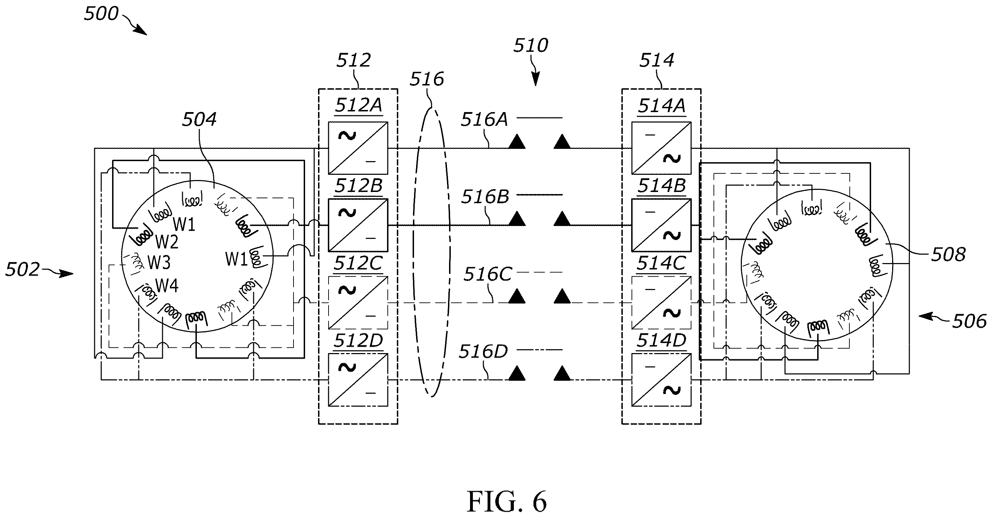

The electrical source 202 is configured to provide electrical, e.g., direct-current (DC) electrical power and/or alternating-current (AC) electrical power. The electrical source 202 incorporates redundancy. In particular, the electrical source 202 incorporates redundancy through, for example, two or more electrical source modules (e.g., as shown in FIG. 4 and FIG. 5), a generator with multiple independent windings (e.g., as shown in FIG. 6), two or more electrical sources (e.g., two generators, three generators, four generators, etc.), or a combination thereof. In such a manner, it will be appreciated that the electrical source 202 is designed and operated to enhance the reliability and fault tolerance of the electrical system 200.

The electrical load 204 is configured to receive the electrical power from the electrical load. The electrical load 204 further incorporates redundancy. In particular, the electrical load 204 incorporates redundancy through, for example, an electric motor with multiple independent windings or phases (e.g., as shown in FIGS 4-6), two or more electric motors (e.g., two electric motors, four electric motors, six electric motors, etc.), or a combination thereof. In such a manner, it will be appreciated that the electrical load 204 is designed and operated to enhance the reliability and fault tolerance of the electrical system 200.

The electrical source 202 is in electrical connection with the electrical load 204 through the power distribution system 206. The power distribution system 206 further includes a plurality of power channels 208 in electrical connection with the electrical source 202 and the electrical load 204. More specifically, the plurality of power channels 208 include a first power channel 208A, a second power channel 208B, a third power channel 208C, and a fourth power channel 208D. Each power channel 208A-D defines a conductor pathway and includes a cable, a conductor, a power transmission line, or the like.

It should be appreciated that although FIG. 3 discloses four power channels, in other exemplary embodiments, any suitable number of power channels may be included (e.g., 2, 3, 4, 5, 6, 8, 10 or more). The number of power channels may be chosen such that the electrical source, the electrical load and the plurality of power channels are designed to the same level of redundancy. Additionally, the number of power channels may be chosen based on the single engine operating conditions or the aircraft flight condition ratings to support continued dispatchability and flight operations of the aircraft (e.g., a single engine aircraft, a twin engine aircraft, etc.) in the event of one or more power channel failures. Moreover, the number of power channels may further be chosen based on a thrust power total for the aircraft.

Referring still to FIG. 3, a first power output (Psi) of the electrical source 202 is in electrical connection to a first power input (P_{L1}) of the electrical load 204 via the first power channel 208A, a second power output (P_{S2}) of the electrical source 202 is in electrical connection to a second power input (P_{L2}) of the electrical load 204 via the second power channel 208B, a third power output (P_{S3}) of the electrical source 202 is in electrical connection to a third power input (P_{L3}) of the electrical load 204 via the third power channel 208C, and a fourth power output (P_{S4}) of the electrical source 202 is in electrical connection to a fourth power input (P_{L4}) of the electrical load 204 via the fourth power channel 208D. The electrical power is distributed or transferred from the electrical source 202 to the electrical load 204 in each power channel 208A-D under normal operating conditions (e.g., high power operation without any component or wiring failure within the electrical system). For example, the plurality of power channels 208 may be configured to (e.g., sized and connected to) transfer at least 1 megawatt (MW) of electrical power from the electrical source 202 to the electrical load 204. In such a configuration, each power channel 208A-D may be configured to (e.g., sized and connected to) transfer 0.25MW electrical power from a respective power output of the electrical source 202 to a respective power input of the electrical source 202.

Further, in the event of a single power channel failure, e.g., such as the first power channel 208A, the electrical power is distributed by a subset of the plurality of power channels 208. In the event of the first power channel 208A failure, the subset of the plurality of power channels may be the second, third and fourth power channels 208B-D. In such a manner, it will be appreciated that, in a single engine aircraft or a twin-engine aircraft the redundancy enables continued or maintained flight capability after a single power channel failure. In other words, the three remaining power channels (208B-D) provide a net electrical power output (e.g., available power) to the electrical load 204, whereby electrical load 204 may be operated within the rated operating conditions for the flight condition. Accordingly, the net electrical power output to the electrical load 204 may be greater than a mission critical parameter for aircraft flight conditions or for dispatchability.

In some embodiments, the power distribution system 206 may include one or more distribution systems 210 electrically coupling the electrical source 202, the electrical load 204 and other various components of the propulsion system 112 of FIG. 1. The distribution systems 210 may include various components known in the art.

Additionally, the power distribution system 206 may further include a plurality of protection devices 212 connected electrically between the electrical source 202 and the electrical load 204 in one or more of power channel 208A-D to protect the electrical system 200 from the effects of a short circuit. The plurality of protection devices 212 protects the electrical load 204 from short circuit events, and may be any of numerous types of protection devices known in the art to detect and isolate a short circuit event.

In some embodiments, the electrical system 200 may further include a control unit 214 operably connected to the power distribution system 206, the electrical source 202 and the electrical load 204. In some examples, the control unit 214 may be operably connected to the one or more distribution systems 210 or plurality of protection devices 212. In some embodiments, the control unit 214 incorporates redundancy through multiple control units 214 with each control unit 214 operably connected to each power channel 208A-D. In other embodiments, the control unit 214 includes one or more dual control units (e.g., two microcontrollers) to incorporate additional redundancy.

The control unit 214 can be any microcontroller, computer, or processor-based device with processor, memory, and programmable input/output peripherals, which is generally designed to govern the operation of other components and devices. It is further understood to include common accompanying accessory devices, including memory, transceivers for communication with other components and devices, etc. The control unit 214 may be configured (for example, by using corresponding programming stored in a memory as will be well understood by those skilled in the art) to carry out one or more of the steps, actions, and/or functions described herein. The control unit 214 may include a memory that includes computer instructions that implement any of the functions described herein.

The control unit 214 is configured to receive data indicative of a power channel failure or a fault in one of the plurality of power channels 208. The data indicative of the power channel failure may include an electrical short circuit, open circuit, component failure, overload, environmental factor, mechanical damage, or intermittent fault. The control unit 214 is configured to control one or more components of the electrical system 200 based on (e.g., in response to) the received data indicative of the power channel failure to distribute the electrical power across a subset of plurality of power channels 208. In examples, controlling one or more components may include sending a trigger command to one of the plurality of protection devices 212 to isolate a fault and/or selectively change an operating condition of the electrical source 202.

Referring now to FIG. 4, one example of the electrical system 200 of FIG. 3 in accordance with some embodiments is provided. The exemplary electrical system 300 may be configured in substantially the same manner as the exemplary electrical system 200 of FIG. 2. However, for the embodiment of FIG. 4, an electrical source 302 includes a plurality of fuel cell modules 304 and an electrical load 306 includes a multi-phase motor 308. As will be appreciated, the electrical system 300 includes the plurality of fuel cell modules 304, a plurality of converters 312, a plurality of inverters 314, the multi-phase motor 308 and the power distribution system 310. The power distribution system 310 includes a plurality of power channels 316.

The electrical source 302 includes a plurality of fuel cell modules 304 connected in parallel configured to provide electrical power. In particular, the plurality of fuel cell modules 304 includes a first fuel cell module 304A, a second fuel cell module 304B, a third fuel cell module 304C, and a fourth fuel cell module 304D. A level of redundancy is incorporated in the electrical source 302 as each fuel cell module 304A-D is configured to provide electrical power independently. In this manner, the electrical load 306 may continue to receive electrical power in the event of the failure of one fuel cell module 304A-D to support continued dispatchability of the aircraft and in-flight aircraft operations.

Additionally, each fuel cell module 304A-D may include one or more fuel cell stacks and each fuel cell stack may include any suitable number of stackable fuel cells. It will be appreciated that the plurality of fuel cell modules 304 may include any suitable type of fuel cell including proton exchange membrane fuel cells (PEMFCs), solid oxide fuel cells (SOFCs), direct methanol fuel cells (DMFCs), alkaline fuel cells (AFCs), and phosphoric acid fuel cells (PAFCs).

The plurality of converters 312 are in electrical connection with the plurality of fuel cell modules 304. The plurality of converters 312 are designed to and operate with a same level of redundancy as the plurality of fuel cell modules 304. In particular, a first converter 312A is in series electrical connection with the first fuel cell module 304A, a second converter 312B is in series electrical connection with the second fuel cell module 304B, a third converter 312C is in series electrical connection with the third fuel cell module 304C, and a fourth converter 312D is in series electrical connection with the fourth fuel cell module 304D.

The electrical load 306 includes a multi-phase motor 308. The multi-phase motor 308 may include multiple phases and multiple independent windings to incorporate a level of redundancy. For the embodiment depicted in FIG. 4, the multi-phase motor 308 includes four phases electrically isolated from one another. Each phase may include a set of independent windings and is connected to one of the fuel cell modules 304A-D. A level of redundancy is incorporated in the multi-phase motor 308 as each phase is isolated from one another, which allows for independent operation and enhanced fault tolerance. In examples, the multi-phase motor 308 is designed to and operate with the same level of redundancy as the plurality of converters 312 and the plurality of fuel cell modules 304.

The plurality of inverters 314 are in electrical connection with the multi-phase motor 308. The plurality of inverters 314 are designed to and operate with a same level of redundancy as the multi-phase motor 308. In examples, the plurality of inverters 314 are designed to and operate with the same level of redundancy as the plurality of converters 312 and the plurality of fuel cell modules 304. In particular, a first inverter 314A is in electrical connection with a first phase of the multi-phase motor 308, a second inverter 314B is in electrical connection with a second phase of the multi-phase motor 308, a third inverter 314C is in electrical connection with a third phase of the multi-phase motor 308 and a fourth inverter 314D is in electrical connection with a fourth phase of the multi-phase motor 308.

The power distribution system 310 electrically couples the electrical source 302 to the electrical load 306. Specifically, the plurality of power channels 316 electrically couples the plurality of fuel cell modules 304 and the plurality of converters 312 to the plurality of inverters 314 and the multi-phase motor 308. The plurality of power channels 316 are designed to and operate with a same level of redundancy as the plurality of fuel cell modules 304, the plurality of converters 312, the plurality of inverters 314, and the multi-phase motor 308. In particular, a first power channel 316A electrically couples the first fuel cell module 304A and the first converter 312A to the first inverter 314A and the first phase of the multi-phase motor 308, a second power channel 316B electrically coupled to the second fuel cell module 304B and the second converter 312B to the second inverter 314B and the second phase of the multi-phase motor 308, a third power channel 316C electrically couples the third fuel cell module 304C and the third converter 312C to the third inverter 314C and the third phase of the multi-phase motor 308 and a fourth power channel 316D electrically couples the fourth fuel cell module 304D and the fourth converter 312D to the fourth inverter 314D and a fourth phase of the multi-phase motor 308.

Referring to FIG. 5, another example of the electrical system 200 of FIG. 3 in accordance with some embodiments is provided. The exemplary electrical system 400 may be configured in substantially the same manner as the exemplary electrical system 200 of FIG. 3. However, for the embodiment of FIG. 5, an electrical source 402 includes a plurality of battery modules 404 and an electrical load 406 includes a multi-phase motor 408. As will be appreciated, the electrical system 400 includes the plurality of battery modules 404, a plurality inverters 414, a multi-phase motor 408 and a power distribution system 410. The power distribution system 410 includes a plurality of power channels 416. The plurality inverters 414, the multi-phase motor 408, and the power distribution system 410 may be configured in a similar manner as described above in FIG. 4 and these descriptions will not be repeated here.

The electrical source 402 includes the plurality of battery modules 404 connected in parallel to provide electrical power to the electrical load 406 through the plurality of power channels 316. In particular, the plurality of battery modules 404 includes a first battery module 404A, a second battery module 404B, a third battery module 404C and a fourth battery module 404D. An output terminal of each battery module 404A-D is electrically coupled to an input terminal of a respective inverter 414A-D through the plurality of power channels 316A-D. As described above, a level of redundancy is created in the electrical source 402 as each battery module 404A-D is configured to provide electrical power independently. In this manner, the electrical load 406 may continue to receive electrical power in the event of the failure of one battery module 404A-D to support continued dispatchability of the aircraft and in-flight operations.

The battery modules 404A-D may be configured in any suitable manner to store electrical power and provide a constant voltage output in relationship to a power requirement of the multi-phase motor 408. In certain exemplary embodiments, the battery module 404A-D may include one or more lithium-ion batteries, and/or one or more batteries of other suitable chemistry.

Referring to FIG. 6, yet another example of the electrical system 200 of FIG. 3 in accordance with some embodiments is provided. The exemplary electrical system 500 may be configured in substantially the same manner as the exemplary electrical system 200 of FIG. 2. However, for the embodiment of FIG. 6, the electrical source 502 includes a generator 504 and the electrical load 506 includes a multi-phase motor 508. As will be appreciated, the electrical system 500 includes the generator 504, a plurality of converters 512, a plurality of inverters 514, a multi-phase motor 508, and a power distribution system 510. The power distribution system 510 includes a plurality of power channels 516. The plurality of converters 512, the plurality inverters 514, the multi-phase motor 508, and the power distribution system 510 may be configured in a similar manner as described above in FIG. 4 and these descriptions will not be repeated here.

The electrical source 502 includes a generator 504. The generator 504 includes multiple independent windings. In examples, the generator 504 is a four-phase generator and includes 12 windings with a set of three windings W1, W2, W3, W4. Each phase of the generator (i.e., each set of three windings W1, W2, W3,W4) is coupled to a respective converter 512A-D, a respective inverter 514A-D, and a respective phase of the multi-phase motor 508 via a respective power channel 516A-D. As described above, a level of redundancy is created in the electrical source 502, as each set of windings W1, W2, W3,W4 is capable of generating electrical power independently. These windings are may be arranged to correspond to a respective phase of the multi-phase motor 508, ensuring that each phase of the multi-phase motor 508 receives power from a respective winding set. This configuration enhances redundancy, as the failure of one winding set does not affect the operation of the others, thereby maintaining continuous power supply and improving overall system reliability.

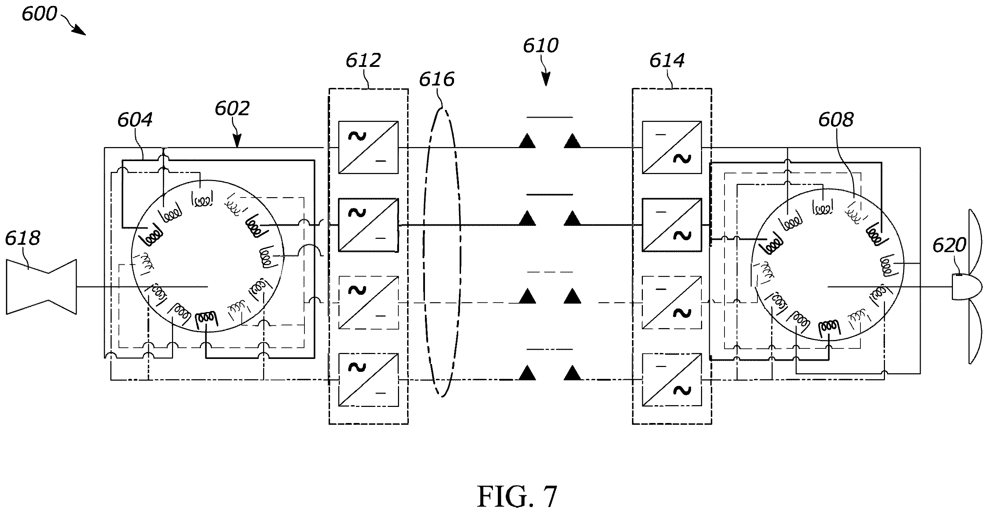

Referring to FIG. 7, yet another example of the electrical system 200 of FIG. 3 in accordance with some embodiments is provided. The exemplary electrical system 600 may be configured in substantially the same manner as the exemplary electrical system 500 of FIG. 6. As will be appreciated, the electrical system 600 includes a generator 604 with multiple independent windings, a plurality of converters 612, a plurality of inverters 614, a multi-phase motor 608 and a power distribution system 610 including a plurality of power channels 616. These elements have been described above with respect to FIG. 6. The electrical source 602 of FIG. 7 additionally includes a combustor 618 in electrical connection with the generator 604. The combustor 618 may be used to power the generator 604. In this manner, the combustor 618 introduces additional redundancy such that a loss of the electrical system does not impact in-flight aircraft conditions. Further, for the embodiment shown, the generator 604 is connected to the fan 620. As compared to FIG. 2, the generator 604 is configured to directly drive the fan 620 and produce thrust.

It should be appreciated that although FIG. 4 and FIG. 5 disclose four fuel cell modules and four battery modules, in other exemplary embodiments, any suitable number of redundant fuel cell modules and battery modules may be included (e.g., 2, 3, 4, 5, 6, 8, or more). Additionally, the number of fuel cell modules and battery modules may be chosen based on a type of aircraft (e.g., a single engine aircraft, a twin engine aircraft, etc.), the single engine operating conditions or the aircraft flight condition ratings to support continued dispatchability and in-flight aircraft conditions in the event of one of failure of one or more fuel cell modules or battery modules. Moreover, the number of fuel cell modules and battery modules may further be chosen based on a thrust power total for the aircraft.

Further, it should be appreciated that although FIG. 6 and FIG. 7 discloses a generator with four phases, in other exemplary embodiments, any suitable number of phases may be included to provide additional redundancy (e.g., three-phase with three windings, six-phase with two sets of three phase windings, etc.). Additionally, in other exemplary embodiments, generator 504 may include one or more multi-phase generators or one or more single-phase generators.

Further, still, it should be appreciated that although FIGS. 4 through 7 each disclose a multi-phase motor with four phases, in other exemplary embodiments, any suitable number of phases may be included to provide redundancy (e.g., 2, 3, 4, 5, 6). Additionally, in other exemplary embodiments, the multi-phase motor may include two or more multi-phase motors. Further, in yet another exemplary embodiment, the multi-phase motor may alternately include multiple electric motors going through a combining gearbox.

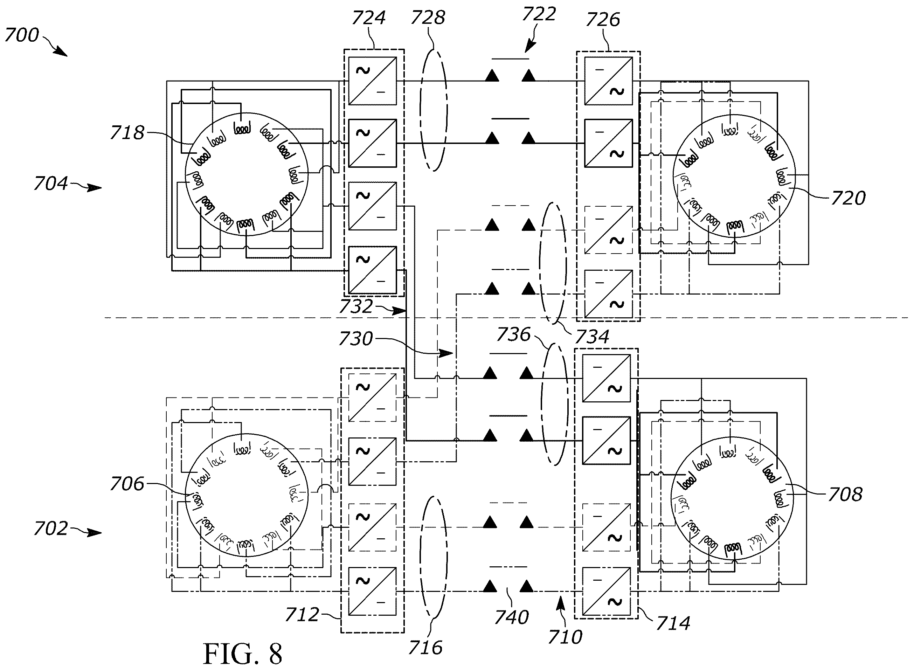

Referring to FIG. 8, a schematic diagram of an electric propulsion system architecture 700 for an aircraft is provided. The exemplary electric propulsion system architecture 700 may be integrated into the exemplary propulsion system 112 of the aircraft 100 of FIG. 1 and may utilize one or more of the electrical systems described herein above (e.g., FIG. 4, FIG. 5, FIG. 6, FIG. 7). As will be appreciated, the electric propulsion system architecture 700 includes a first multi-channel redundant electrical network 702, a second multi-channel redundant electrical network 704 and a control unit. In examples, the first multi-channel redundant electrical network 702 may be incorporated into the first electrical system 134 and the second multi-channel redundant electrical network 704 may be incorporated into the second electrical system 136 as shown in FIG. 1.

The first multi-channel redundant electrical network 702 is configured in a similar manner as the exemplary electrical system as described above with reference to FIG. 3. More specifically, the first multi-channel redundant electrical network 702 includes at least one electrical source 706, and a plurality of converters 712 connected to a plurality of inverters 714 and at least one electrical load 708 through a first power distribution system 710. The first power distribution system 710 includes a first plurality of power channels 716. For the embodiment depicted, the at least one electrical source 706 and the at least one electrical load 708 include a generator (e.g., such as a multi-phase generator) and an electric motor (e.g., such as a multi-phase motor), respectively. In examples, the at least one electrical load 708 may include the propulsion unit 114 as shown in FIG. 1. Additionally, alternatively, the at least one electrical source 706 and at least one electrical load 708 may include any one of the electrical source and electrical load as described above with reference to FIG. 5-7. For example, the at least one electrical source may include any one of, or a combination of, a multi-phase generator, a fuel cell module, a battery module.

The second multi-channel redundant electrical network 704 is configured in a similar manner as the exemplary electrical system as described above with reference to FIG. 4. More specifically, the second multi-channel redundant electrical network 704 includes at least one second electrical source 718 and a plurality of converters 724 connected to a plurality of inverters 726 and at least one electrical load 720 through a second power distribution system 722. The second power distribution system 722 includes a second plurality of power channels 728. For the embodiment depicted, the at least one electrical source 718 and the at least one electrical load 720 include a generator (e.g., such as a multi-phase generator) and an electric motor (e.g., such as a multi-phase motor), respectfully. In examples, the at least one electrical load 720 may include the propulsion unit 114 as shown in FIG. 1. Additionally, alternatively, the at least one electrical source 718 and at least one electrical load 720 may include any one of the electrical source and electrical load as described above with reference to FIG. 5-7. For example, the at least one electrical source may include any one of, or a combination of, a multi-phase generator, a fuel cell module, a battery module.

In the electric propulsion system architecture 700, the first multi-channel redundant electrical network 702 and the second multi-channel redundant electrical network 704 are designed to a same level of redundancy. In particular, each component of the first multi-channel redundant electrical network 702 is designed to a same level of redundancy as each component of the second multi-channel redundant electrical network 704. In this manner, in the event of a power channel, an imbalance of electrical power delivered to the electrical loads (e.g., the propulsion units 114 of FIG. 1) may be reduced. Accordingly, the designed redundancy of the multi-channel arrangement may reduce an asymmetric thrust experienced by the aircraft 100 of FIG. 1 and allow for dispatch capability of the aircraft in an event of a power channel failure.

In some embodiments, the electric propulsion system architecture 700 includes a third power distribution system 730 and a fourth power distribution system 732. The third power distribution system 730 includes at least one third power channel 734 in electrical connection between the first electrical source 706 and the second electrical load 720. The fourth power distribution system 732 includes at least one fourth power channel 736 in electrical connection between the second electrical source 718 and the first electrical load 708. The cross feed of the at least one third power channel 734 and the at least one fourth power channel 736 incorporate additional redundancy benefits, and in the event of a power channel failure, reduce an asymmetric thrust experienced by the aircraft 100 of FIG. 1.

It should be appreciated that although FIG. 8 discloses four power distribution systems, in other exemplary embodiments, any suitable number of power distribution systems may be included (e.g. 1, 2, 4, 6). In some examples, the at least one third power channel 734 may be cross-fed through the first power distribution system 710 and the at least one fourth power channel 736 may be cross-fed through the second power distribution system 722.

Further, it should be appreciated that although FIG. 8 discloses four power channels in each redundant electrical network, in other exemplary embodiments, any suitable number of power channels may be included (e.g., 2, 3, 4, 5, 6, 8, 10 or more). Moreover, any suitable number of power channels may be cross fed between each redundant electrical network. The number of power channels may be chosen such that the electrical source, the electrical load and the plurality of power channels are designed to the same level of redundancy. Additionally, the number of power channels may be chosen based on the single engine operating conditions or the aircraft flight condition ratings to support continued dispatchability and flight operations of the aircraft (e.g., a single engine aircraft, a twin engine aircraft, etc.) in the event of one or more power channel failures (e.g. a single power channel failure followed by a subsequent power channel failure). Moreover, the number of power channels may further be chosen based on a thrust power total for the aircraft.

In some embodiments, the electric propulsion system architecture 700 may include a control unit (not shown). The control unit may be configured in substantially the same manner as the control unit 214 as described with reference to FIG. 3. The control unit may be operatively connected to the at least one electrical source 706, the first power distribution system 710, the at least one electrical load 708, the at least one electrical source 718, the second power distribution system 722 and the at least one electrical load 720. The control unit is configured to receive data indicative of a power channel failure or a fault in one of the first multi-channel redundant electrical network 702 or the second multi-channel redundant electrical network 704. The data indicative of the power channel failure may include an electrical short circuit, open circuit, component failure, overload, environmental factor, mechanical damage, or intermittent fault. The control unit is configured to control one or more components of the electric propulsion system architecture 700 based on the received data indicative of the power channel failure to distribute the electrical power across a subset of the first plurality of power channels 716 of the first power distribution system 710 or the second plurality of power channels 728 of the second power distribution system 722.

In some embodiments, the electric propulsion system architecture 700 includes a plurality of protection devices 740 in each one of the power channels. In examples, controlling one or more components may include sending a trigger command to one or more of the plurality of protection devices 740 to isolate a fault and/or selectively change an operating condition of the either the first multi-channel redundant electrical network 702 or the second multi-channel redundant electrical network 704.

In some examples, the control unit is further configured to control a distribution of electrical power by the first plurality of power channels 716, the second plurality of power channels 728, the at least one third power channel 734 and the at least one fourth power channel 736 under normal operation mode (e.g., high power operation without any component or wiring failure within the electrical system) and control a distribution of electrical power by a first subset of the first plurality of power channels 716, a second subset of the second plurality of power channels 728, the at least one third power channel 734 or the at least one fourth power channel 736 upon detection of a power channel failure.

Further aspects of the disclosure are provided by the subject matter of the following clauses:

An electrical system for an aircraft comprising: an electrical source; an electrical load; and a power distribution system comprising a plurality of power channels electrically coupling the electrical source to the electrical load to deliver the electrical power from the electrical source to the electrical load; wherein the electrical power is distributed in each power channel under normal operating conditions; and wherein, in an event of a power channel failure, the electrical power is distributed by a subset of the plurality of power channels such that the aircraft can maintain aircraft flight conditions during the power channel failure.

The system of any preceding clause, wherein the electrical source comprises at least one of a generator, a fuel cell module or a battery module.

The system of any preceding clause, wherein the electrical load comprises a multi-phase motor or a plurality of electric motors.

The system of any preceding clause, wherein each power channel comprises a converter in electrical connection with the electrical source and an inverter in electrical connection with the electrical load.

The system of any preceding clause, wherein a sizing of each power channel is configured to support continued dispatchability of the aircraft in the event of a single power channel failure and in an event of a subsequent power channel failure.

The system of any preceding clause, further comprising distribution systems connected to the power distribution system between the electrical source and the electrical load.

An electric propulsion system architecture for an aircraft comprising: a first electrical source; a second electrical source; at least one first electrical propulsion unit of the aircraft electrically connected to the first electrical source through a first power distribution system comprising a plurality of first power channels; and at least one second electrical propulsion unit of the aircraft electrically connected to the second electrical source through a second power distribution system comprising a second plurality of power channels.

The electric propulsion system architecture of any preceding clause, further comprising a control unit configured to: receive data indicative of a power channel failure in the first plurality of power channels and/or the second plurality of power channels; and distribute an electrical power across a subset of the first plurality of power channels and/or the second plurality of power channels in response to receiving data indicative of the power channel failure to reduce an asymmetric thrust between the first electrical propulsion system and the second electrical propulsion system

The electric propulsion system architecture of any preceding clause, wherein the first electrical source and the second electrical source comprise at least one of one of a multi-phase generator, a fuel cell module or a battery module.

The electric propulsion system architecture of any preceding clause, wherein the first electrical propulsion unit and the second electric propulsion unit comprise a plurality of inverters and an electric motor configured to receive electrical power from the plurality of inverters.

The electric propulsion system architecture of any preceding clause, wherein the at least one first electrical propulsion unit is located on a first side of the aircraft and the at least one second electrical propulsion unit is located on a second side of the aircraft.

The electric propulsion system architecture of any preceding clause, wherein a level of redundancy in the first power distribution system is the same as a level of redundancy in the second power distribution system to reduce an asymmetric thrust and allow for dispatch capability of the aircraft in an event of a power channel failure.

The electric propulsion system architecture of any preceding clause, wherein a net power after a power channel failure is greater than a mission critical parameter for aircraft flight conditions.

The electric propulsion system architecture of any preceding clause, wherein a number of power channels in the first power distribution system and the second power distribution system is based on a thrust power total for the aircraft.

A multi-redundant electric propulsion architecture for an aircraft comprising: a first multi-channel redundant electrical network comprising at least one first electrical source connected to at least one first electrical load through a first power distribution system, wherein the first power distribution system comprises a first plurality of power channels; a second multi-channel redundant electrical network comprising at least one second electrical source connected to at least one second electrical load through a second power distribution system, wherein the second power distribution system comprises a second plurality of power channels; and a control unit configured to control a distribution of electrical power by the first plurality of power channels and the second plurality of power channels under normal operation mode and control the distribution of electrical power by a first subset of the first plurality of power channels or a second subset of the second plurality of power channels upon detection of a power channel failure.

The multi-redundant electric propulsion architecture of any preceding clause, wherein the at least one first electrical source and the at least one second electrical source comprise at least one of one of a multi-phase generator, a fuel cell module or a battery module.

The multi-redundant electric propulsion architecture of any preceding clause, wherein the at least one first electrical load and the at least one second electrical load comprise a plurality of inverters and a multi-phase motor configured to receive electrical power from the plurality of inverters.

The multi-redundant electric propulsion architecture of any preceding clause, wherein the motor comprises a multi-phase motor or a plurality of electric motors.

The multi-redundant electric propulsion architecture of any preceding clause, further comprising: a third power distribution system comprising at least one third power channel connecting the first electrical source to the second electrical load; and a fourth power distribution system comprising at least one fourth power channel connecting the second electrical source to the first electrical load.

The multi-redundant electric propulsion architecture of any preceding clause, wherein the control unit is further configured to control a distribution of electrical power by the first plurality of power channels, the second plurality of power channels, the at least one third power channel and the at least one fourth power channel under normal operation mode and control a distribution of electrical power by a first subset of the first plurality of power channels, a second subset of the second plurality of power channels, the at least one third power channel or the at least one fourth power channel upon detection of a power channel failure.

An electrical system for an aircraft, comprising: an electrical source; an electrical load; and a power distribution system comprising a plurality of power channels electrically coupling the electrical source to the electrical load to deliver electrical power from the electrical source to the electrical load; wherein the electrical power is distributed in each power channel under normal operating conditions; and wherein, in an event of a power channel failure, the electrical power is distributed by a subset of the plurality of power channels such that the aircraft can maintain aircraft flight conditions during the power channel failure.

The electrical system of any preceding clause, wherein the electrical source comprises at least one of a generator, a fuel cell module or a battery module.

The electrical system of any preceding clause, wherein the electrical load comprises a multi-phase motor or a plurality of electric motors.

The electrical system of any preceding clause, wherein each power channel comprises a converter in electrical connection with the electrical source and an inverter in electrical connection with the electrical load.

The electrical system of any preceding clause, wherein a sizing of each power channel is configured to support continued dispatchability of the aircraft in the event of a single power channel failure and in an event of a subsequent power channel failure.

The electrical system of any preceding clause, further comprising distribution systems connected to the power distribution system between the electrical source and the electrical load.

An electric propulsion system architecture for an aircraft, comprising: a first electrical source; a second electrical source; at least one first electrical propulsion unit of the aircraft electrically connected to the first electrical source through a first power distribution system comprising a plurality of first power channels; and at least one second electrical propulsion unit of the aircraft electrically connected to the second electrical source through a second power distribution system comprising a plurality of second power channels.

The electric propulsion system architecture of any preceding clause, further comprising a control unit configured to: receive data indicative of a power channel failure in the plurality of first power channels and/or the plurality of second power channels; and distribute an electrical power across a subset of the plurality of first power channels and/or the plurality of second power channels in response to receiving data indicative of the power channel failure to reduce an asymmetric thrust between the first electrical propulsion unit and the second electrical propulsion unit.

The electric propulsion system architecture of any preceding clause, wherein the first electrical source and the second electrical source comprise at least one of one of a multi-phase generator, a fuel cell module or a battery module.

The electric propulsion system architecture of any preceding clause, wherein the first electrical propulsion unit and the second electric propulsion unit comprise a plurality of inverters and an electric motor configured to receive electrical power from the plurality of inverters.

The electric propulsion system architecture of any preceding clause, wherein the at least one first electrical propulsion unit is located on a first side of the aircraft and the at least one second electrical propulsion unit is located on a second side of the aircraft.

The electric propulsion system architecture of any preceding clause, wherein a level of redundancy in the first power distribution system is the same as a level of redundancy in the second power distribution system to reduce an asymmetric thrust and allow for dispatch capability of the aircraft in an event of a power channel failure.

The electric propulsion system architecture of any preceding clause, wherein a net power after a power channel failure is greater than a mission critical parameter for aircraft flight conditions.

The electric propulsion system architecture of any preceding clause, wherein a number of power channels in the first power distribution system and the second power distribution system is based on a thrust power total for the aircraft.

A multi-redundant electric propulsion architecture for an aircraft, comprising: a first multi-channel redundant electrical network comprising at least one first electrical source connected to at least one first electrical load through a first power distribution system, wherein the first power distribution system comprises a first plurality of power channels; a second multi-channel redundant electrical network comprising at least one second electrical source connected to at least one second electrical load through a second power distribution system, wherein the second power distribution system comprises a second plurality of power channels; and a control unit configured to control a distribution of electrical power by the first plurality of power channels and the second plurality of power channels under normal operation mode and control the distribution of electrical power by a first subset of the first plurality of power channels or a second subset of the second plurality of power channels upon detection of a power channel failure.

The multi-redundant electric propulsion architecture of any preceding clause, wherein the at least one first electrical source and the at least one second electrical source comprise at least one of one of a multi-phase generator, a fuel cell module or a battery module.

The multi-redundant electric propulsion architecture of any preceding clause, wherein the at least one first electrical load and the at least one second electrical load comprise a plurality of inverters and a motor configured to receive electrical power from the plurality of inverters.

The multi-redundant electric propulsion architecture of any preceding clause, wherein the motor comprises a multi-phase motor or a plurality of electric motors.

The multi-redundant electric propulsion architecture of any preceding clause, further comprising: a third power distribution system comprising at least one third power channel connecting the first electrical source to the second electrical load; and a fourth power distribution system comprising at least one fourth power channel connecting the second electrical source to the first electrical load.

The multi-redundant electric propulsion architecture of any preceding clause, wherein the control unit is further configured to control a distribution of electrical power by the first plurality of power channels, the second plurality of power channels, the at least one third power channel and the at least one fourth power channel under normal operation mode and control a distribution of electrical power by a first subset of the first plurality of power channels, a second subset of the second plurality of power channels, the at least one third power channel or the at least one fourth power channel upon detection of a power channel failure.

## Claims

1. An electrical system (700) for an aircraft (100), comprising:
an electrical source (706);
an electrical load (708); and
a first power distribution system (710) comprising a plurality of first power channels (716) electrically coupling the electrical source (706) to the electrical load (708) to deliver electrical power from the electrical source (706) to the electrical load (708);
wherein the electrical power is distributed in each power channel (716) under normal operating conditions; and
wherein, in an event of a power channel failure, the electrical power is distributed by a subset of the plurality of first power channels (716) such that the aircraft (100) can maintain aircraft flight conditions during the power channel failure.

2. The electrical system of claim 1, wherein the electrical source (706) comprises at least one of a generator, a fuel cell module or a battery module.

3. The electrical system of any preceding claim, wherein the electrical load (708) comprises a multi-phase motor or a plurality of electric motors.

4. The electrical system of any preceding claim, wherein each power channel (716) comprises a converter (712) in electrical connection with the electrical source (706) and an inverter (714) in electrical connection with the electrical load (708).

5. The electrical system of any preceding claim, wherein a sizing of each power channel (716) is configured to support continued dispatchability of the aircraft (100) in the event of a single power channel failure and in an event of a subsequent power channel failure.

6. The electrical system of any preceding claim, further comprising distribution systems (210) connected to the first power distribution system (710) between the electrical source (706) and the electrical load (708).

7. The electrical system of any preceding claim, further comprising:
a second electrical source (718);
a second electrical load (720); and
a second power distribution system (722) comprising a second plurality of power channels (728) electrically coupling the second electrical source (718) to the second electrical load (720) to deliver electrical power from the second electrical source (718) to the second electrical load (720);

8. The electrical system of claim 7, further comprising a control unit (214) configured to:
receive data indicative of a power channel failure in the plurality of first power channels (716) and/or the plurality of second power channels (728); and
distribute an electrical power across a subset of the plurality of first power channels (716) and/or the plurality of second power channels (728) in response to receiving data indicative of the power channel failure.

9. The electrical system of any of claims 7-8, wherein the second electrical source (718) comprises at least one of a multi-phase generator, a fuel cell module or a battery module.

10. The electrical system of any of claims 7-9, wherein the second electrical load (720) comprises a plurality of inverters (726) and an electric motor to receive electrical power from the plurality of inverters (726).

11. The electrical system of any of claims 7-10, wherein the first electrical load (708) is located on a first side of the aircraft (100) and the second electrical (720) is located on a second side of the aircraft (100).

12. The electrical system of any of claims 7-11, wherein a level of redundancy in the first power distribution system (710) is the same as a level of redundancy in the second power distribution system (722) to reduce an asymmetric thrust and allow for dispatch capability of the aircraft (100) in an event of a power channel failure.

13. The electrical system of any of claims 7-12, wherein a net power after a power channel failure is greater than a mission critical parameter for aircraft flight conditions.

14. The electrical system of any of claims 7-13, wherein a number of power channels in the first power distribution system (710) and the second power distribution system (722) is based on a thrust power total for the aircraft (100).

15. The electrical system of any of claims 7-14, further comprising:
a third power distribution system (730) comprising at least one third power channel (734) electrically connected to the first electrical source (706) and the second electrical load (720); and
a fourth power distribution system (732) comprising at least one fourth power channel (736) electrically connected to the second electrical source (718) and the first electrical load (708).
